(19) Europäisches Patentamt
European Patent Office
Office européen des brevets

(11) **EP 3 009 756 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(51) Int Cl.:
*F24F 11/83* *(2018.01)* *F24F 11/84* *(2018.01)*
*F24F 11/85* *(2018.01)* *F24F 140/20* *(2018.01)*
*F25D 16/00* *(2006.01)*

(21) Anmeldenummer: **14188885.9**

(22) Anmeldetag: **14.10.2014**

(54) **Verfahren zum Betrieb eines Kühlsystems sowie Kühlsystem**

Method for operation of a cooling system and cooling system

Procédé de fonctionnement d'un système de refroidissement ainsi que système de refroidissement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.04.2016 Patentblatt 2016/16**

(73) Patentinhaber: **Grundfos Holding A/S**
**8850 Bjerringbro (DK)**

(72) Erfinder: **Hillerup Lyhne, Casper**
**8850 Bjerringbro (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
**DE-U1- 9 404 319     DE-U1- 9 404 320**
**DE-U1- 9 404 321**

**Beschreibung**

Die Erfindung betrifft ein Verfahren zum Betrieb eines Kühlsystems, welches zumindest ein Kühlaggregat, zumindest einen Kältespeicher sowie zumindest einen zu kühlenden Lastkreis aufweist, welche von einem Kühlmedium durchströmt werden. Darüber hinaus ist Gegenstand der Erfindung ein entsprechendes Kühlsystem.

Es sind Kühlsysteme bekannt, welche Kältespeicher, insbesondere Eisspeicher aufweisen, um Kälte speichern zu können. Dies ermöglicht es, ein Kühlaggregat beispielsweise dann zu betreiben, wenn überschüssige Energie oder besonders preiswerte Energie zur Verfügung steht, während beispielsweise in einem Gebäude aktuell kein ausreichend großer Kühlbedarf vorhanden ist. In einem solchen Betriebszustand kann anstelle des Gebäudes der Kältespeicher gekühlt werden. Der Kältespeicher kann dann später zu einem Zeitpunkt, zu welchem eine Kühlleistung zur Kühlung des Gebäudes erforderlich ist, das Kühlaggregat aber keine ausreichende Kühlleistung zur Verfügung stellen kann oder die Energiepreise höher sind, dazu benutzt werden, Wärme aus dem zu kühlenden Gebäude in den Kältespeicher abzuführen. Im Falle eines Eisspeichers führt dies dann beispielsweise zum Auftauen des Eisspeichers.

DE 94 04 319 U1 offenbart eine Kälteerzeugungsanlage, welche neben einer Kältemaschine einen Kältespeicher zur Kühlung eines Kälteabnehmers aufweist. Bei dieser Kälteerzeugungsanlage sind 4 Betriebszustände möglich, einmal eine Kühlung allein über den Kältespeicher, einmal eine Kühlung allein über die Kältemaschine, eine Kühlung sowohl über die Kältemaschine als auch den Kältespeicher und ein vierter Betriebszustand zum Aufladen des Kältespeichers. Zur Temperaturregelung ist ausgangsseitig des Kältespeichers ein Regelventil in Form eines Mischventiles vorgesehen. Aus DE 94 04 320 U1 ist eine entsprechende Kälteerzeugungsanlage bekannt.

Beim Entladen des Kältespeichers, das heißt, wenn er zur Kühlung des Lastkreises zusammen mit dem Kühlaggregat eingesetzt wird, stellt sich die erforderliche Steuerung bzw. Regelung kompliziert dar. Ein erstes Ziel der Regelung ist es, die Vorlauftemperatur in dem Lastkreis in gewünschter Weise einzustellen und auf einem gewünschten Sollwert zu halten. Daher ist es erforderlich, die Kühlleistung, welche dem Kältespeicher entnommen wird bzw. von dem Kältespeicher bereitgestellt wird, auf eine gewünschte Zielgröße einzustellen, um eine optimale Nutzung des Kältespeichers zu ermöglichen. Bei einer solchen Regelung mit zwei Zielgrößen besteht die Gefahr unerwünschter Regelschwingungen bzw. eines Aufschaukelns der Regelung.

Im Hinblick auf diese Problematik ist es Aufgabe der Erfindung, ein Verfahren zum Betrieb eines Kühlsystems, welches zumindest ein Kühlaggregat, zumindest einen Kältespeicher sowie zumindest einen zu kühlenden Lastkreis aufweist, welche von einem Kühlmedium durchströmt werden, sowie ein entsprechendes Kühlsystem bereitzustellen, mit welchem sich die genannten Probleme bei der Regelung vermeiden lassen.

Diese Aufgabe wird gelöst durch ein Verfahren mit den in Anspruch 1 angegebenen Merkmalen sowie durch ein Kühlsystem mit den in Anspruch 11 angegebenen Merkmalen. Bevorzugte Ausführungsformen ergeben sich aus den zugehörigen Unteransprüchen, der nachfolgenden Beschreibung sowie den beigefügten Figuren.

Das erfindungsgemäße Verfahren ist vorgesehen bzw. ausgebildet zum Betrieb eines Kühlsystems, wobei das Kühlsystem zumindest ein Kühlaggregat, zumindest einen Kältespeicher, beispielsweise einen Eisspeicher, sowie zumindest einen zu kühlenden Lastkreist aufweist. Das Kühlaggregat, der Kältespeicher und der Lastkreis werden dabei von einem Kühlmedium im Kreislauf durchströmt. Der Lastkreis kann dabei einen Wärmetauscher aufweisen, welcher auf einer ersten Seite von dem Kühlmedium des Kreislaufs durchströmt wird und an dessen zweiter Seite der Lastkreis angebunden ist. Das Kühlaggregat kann einmal den Kältespeicher oder alternativ oder zusätzlich direkt den Lastkreis kühlen. Der Kältespeicher wiederum kann ebenfalls zur Kühlung des Lastkreises dienen. Ein Umschalten zwischen diesen Betriebszuständen kann durch geeignete Ventile und/oder Pumpen erfolgen.

Das erfindungsgemäße Verfahren betrifft die Kühlung des Lastkreises und sieht für diesen Fall eine spezielle Steuerung und/oder Regelung des Betriebes der zuvor genannten Komponenten vor. Bei der Kühlung des Lastkreises werden erfindungsgemäß eine Vorlauftemperatur, insbesondere die Vorlauftemperatur des Lastkreises sowie Teile der aus dem zumindest einen Kältespeicher entnommenen Kühlleistung eingestellt. Im Falle eines Wärmetauschers im Lastkreis ist diese Vorlauftemperatur bevorzugt die Vorlauftemperatur an der genannten zweiten Seite des Wärmetauschers. Die Vorlauftemperatur und die Kühlleistung werden bevorzugt gesteuert bzw. geregelt, um gewünschte Sollwerte zu erreichen. Die Einstellung dieser Größen erfolgt erfindungsgemäß durch Anpassen einer von dem zumindest einen Kühlaggregat bereitgestellten Ausgangstemperatur des Kühlmediums sowie durch Anpassen eines Durchflusses des Kühlmediums durch den zumindest einen Kältespeicher. Das Anpassen der Ausgangstemperatur des Kühlaggregates kann durch Leistungsanpassung des Kühlaggregates, das heißt durch Verändern der Kühlleistung erreicht werden. Der Durchfluss des Kühlmediums durch den zumindest einen Kältespeicher kann durch zumindest ein geeignetes Ventil und/oder zumindest eine Pumpe erfolgen, durch welche der Durchfluss von Kühlmedium durch den Kältespeicher variierbar ist. Erfindungsgemäß ist nun vorgesehen, dass, um ein unerwünschtes Schwingen bzw. Aufschaukeln der Regelung zu vermeiden, der Durchfluss des Kühlmediums durch den Kältespeicher und die Ausgangstemperatur des Kühlmediums an der Ausgangsseite des Kühlaggregates nicht gleichzeitig verändert werden. Vielmehr ist eine hierarchische bzw. sequentielle Steuerung bzw. Regelung vorgesehen, gemäß derer in einem ersten Regelbereich bzw. Steuerbereich die Vorlauftemperatur allein durch Anpassen des Durchflusses durch den Kältespeicher eingestellt wird. Darüber hinaus ist ein zweiter Regel- bzw. Steuerbereich vorgesehen, in welchem die Vorlauftemperatur allein durch Anpassen der Ausgangstemperatur eingestellt wird.

Bei der Anwendung des beschriebenen Verfahrens beim Kühlen des Lastkreises ist der Kältespeicher mit dem Kühlaggregat in einer Parallelschaltung mit dem Lastkreis verbunden. Das heißt, es gibt zwei zueinander parallele Kühlmittelkreisläufe, ein erster durch den Kältespeicher und den Lastkreis und ein zweiter durch das Kühlaggregat und den Lastkreis, wobei die Kühlkreisläufe durchaus miteinander in Verbindung stehen können. Bei dieser Anordnung wird sichergestellt, dass sowohl der Kältespeicher als auch das Kühlaggregat ihre maximale Kühlleistung direkt dem Lastkreis zur Verfügung stellen können.

In dem ersten Regelbereich, in welchem die Vorlauftemperatur allein durch Anpassen des Durchflusses von Kühlmedium durch den Kältespeicher eingestellt wird, wird die Ausgangstemperatur des Kühlaggregates vorzugsweise nicht verändert. Insbesondere ist in diesem Betriebszustand bzw. Regelbereich das Kühlaggregat nicht in Betrieb. Das heißt, bevorzugt wird in diesem Regelbereich die gesamte Kühlleistung für den Lastkreis von dem Kältespeicher zur Verfügung gestellt.

In dem zweiten Regelbereich, in welchem die Vorlauftemperatur allein durch Anpassen der Ausgangstemperatur des Kühlaggregates eingestellt wird, wird vorzugsweise der Durchfluss durch den zumindest einen Kältespeicher zur Einstellung der Vorlauftemperatur nicht angepasst. Das heißt, die Einstellung, insbesondere Steuerung und/oder Regelung der Vorlauftemperatur erfolgt nur unter Veränderung der Ausgangstemperatur des Kühlmediums bzw. des Kühlaggregates. In diesem zweiten Regelbereich wird weiter bevorzugt der Durchfluss durch den Kältespeicher auf einem vorgegebenen Durchflusssollwert gehalten. Hierzu kann eine entsprechende Steuerung bzw. Regelung eines Durchflussreglers in dem Strömungsweg durch den Kältespeicher, beispielsweise in Form eines einstellbaren Ventils oder einer Pumpe, vorgesehen sein.

Die Entscheidung, wann der erste beschriebene Regelbereich und wann der zweite beschriebene Regelbereich zur Anwendung kommen, kann beispielsweise in Abhängigkeit eines weiteren Parameters erfolgen. Besonders bevorzugt ist dieser Parameter der Durchfluss durch den Kältespeicher, welcher oben beschrieben wurde. So wird vorzugsweise der erste Regelbereich angewendet, bis dieser Durchfluss einen vorbestimmten Durchflusssollwert erreicht. Das bedeutet, dass die Einstellung der Vorlauftemperatur durch Anpassen des Durchflusses erfolgt, bis ein vorbestimmter Durchflusssollwert, insbesondere ein Maximalwert für den Durchfluss erreicht ist. Das Erreichen eines solchen Wertes kann bedeuten, dass er seine maximale Kühlleistung erreicht hat und dass eine weitere Steigerung der Kühlleistung allein mit Hilfe des Kältespeichers nicht mehr möglich ist. Zu diesem Zustand wird dann vorzugsweise in dem beschriebenen zweiten Regelbereich übergegangen.

Gemäß einer weiteren bevorzugten Ausführungsform der Erfindung wird der Durchflusssollwert, bei dessen Erreichen der erste Regelbereich verlassen wird und/oder auf welchem der Durchfluss im zweiten Regelbereich gehalten wird, durch einen Kühlleistungsregler vorgegeben, welcher die Kühlleistung auf einen Kühlleistungs-Referenzwert regelt. Das heißt, der Durchflusssollwert ist kein fest vorgegebener Wert, sondern ein Wert, welcher von dem Kühlleistungsregler vorgegeben wird, wenn dieser die Kühlleistung auf einen Kühlleistungs-Referenzwert regelt. Dieser Kühlleistungs-Referenzwert kann als Sollwert für die von dem Kältespeicher abzugebende Kühlleistung vorgegeben werden. Der Kühlleistungsregler stellt den Durchfluss dann so ein, dass die tatsächliche Kühlleistung diesen Referenzwert erreicht bzw. einhält. Dies erfolgt im zugehörigen Regelkreis.

Weiter bevorzugt wird durch einen Temperaturregler, welcher die Vorlauftemperatur, das heißt die Vorlauftemperatur des Lastkreises auf einen Vorlauftemperatur-Referenzwert regelt, eine Temperaturstellgröße vorgegeben. Das heißt, der Temperaturregler ist bestrebt, die aktuelle tatsächliche Vorlauttemperatur so einzustellen, dass ein Vorlauftemperatur-Referenzwert erreicht wird. Dieser Vorlauftemperatur-Referenzwert wird dem Regler vorgegeben, beispielsweise in Abhängigkeit einer Außentemperatur oder einer zu erreichenden Innentemperatur eines durch den Lastkreis zu kühlenden Raumes oder Gebäudes. Die Temperaturstellgröße bildet ein Ausgangssignal des Temperaturreglers und kann in einem weiteren Regel- bzw. Steuerschritt dazu genutzt werden, den Durchfluss oder die Ausgangstemperatur des Kühlaggregates, wie es oben beschrieben wurde, einzustellen. So wird abhängig von der Temperaturstellgröße vorzugsweise in dem ersten Regelbereich der Durchfluss eingestellt und in dem zweiten Regelbereich wird vorzugsweise abhängig von der Temperaturstellgröße die Ausgangstemperatur eingestellt. Dies erfolgt in einem geeigneten Steuer- bzw. Regelschritt in Form einer vorgegebenen Abhängigkeit, beispielsweise einer linearen Abhängigkeit.

Zum Einstellen der Ausgangstemperatur des Kühlaggregates wird vorzugsweise eine Temperaturdifferenz herangezogen, welche die Kühlleistung wiederspiegelt bzw. der Kühlleistung entspricht. Abhängig von der Kühlleistung des Kühlaggregates kann diese eine bestimmte Temperaturdifferenz zwischen Eingangs- und Ausgangsseite des Kühlaggregates bereitstellen. Mit größerer Kühlleistung steigt diese Temperaturdifferenz. Die Anpassung der Ausgangstemperatur kann dabei in der Weise geschehen, dass die Eingangstemperatur des Kühlmediums an der Eingangsseite des Kühlaggregates bestimmt wird und dann die Temperaturdifferenz, welche von dem Kühlaggregat bereitgestellt wird, so eingestellt wird, dass eine gewünschte Ausgangstemperatur erreicht wird.

Gemäß einer besonderen Ausführungsform der Erfindung kann ein dritter Regelbereich vorgesehen sein, in dem die Vorlauftemperatur durch Einstellen des Durchflusses durch den Kältespeicher bei gleichzeitigem Betrieb des Kühlaggregates eingestellt und insbesondere geregelt wird. In diesem dritten Regelbereich wird vorzugsweise das Kühlaggregat mit maximaler Leistung bzw. maximaler Geschwindigkeit seines Antriebes betrieben. Der dritte Regelbereich ist somit vorzugsweise ein Regelbereich, der dann zum Einsatz kommt, wenn der Lastkreis eine maximale Kühlleistung erfordert, welche weder allein von dem Kältespeicher noch allein von dem Kühlaggregat bereitgestellt werden kann, sodass beide gemeinsam zum Einsatz kommen. Wenn das Kühlaggregat in diesem Regelbereich mit maximaler Leistung bzw. maximaler Geschwindigkeit betrieben wird, kann dann die Einstellung bzw. Regelung der Vorlauftemperatur durch Einstellen bzw. Variation des Durchflusses durch den Kältespeicher erfolgen, sodass weiterhin eine Einstellung bzw. Regelung der Vorlauftemperatur möglich ist, wobei bei dieser Einstellung bzw. Regelung nur eine Größe, nämlich der Durchfluss durch den Kältespeicher veränderlich ist.

In dem dritten Regelbereich ist der Durchfluss durch den zumindest einen Kältespeicher vorzugsweise bis zu einem Maximalwert einstellbar. Dabei handelt es sich vorzugsweise um einen physikalischen Maximalwert des Systems, beispielsweise um den maximalen Durchfluss, welchen ein Pumpenaggregat bereitstellen kann oder ein Ventil zulassen kann. Das heißt, in diesem Regelbereich kann so die maximale Kühlleistung des Kältespeichers ausgenutzt werden, indem der maximal mögliche Durchfluss eingestellt werden kann.

Weiter bevorzugt wird in dem dritten Regelbereich das Kühlaggregat derart eingestellt oder betrieben, dass eine Sollausgangstemperatur des Kühlaggregates und/oder eine Solltemperaturdifferenz des Kühlaggregates, das heißt eine Solltemperaturdifferenz zwischen Ausgang und Eingang des Kühlaggregates einen physikalischen Maximalwert annehmen. Vorzugsweise wird in dem dritten Regelbereich, wie oben beschrieben, die maximal mögliche Kühlleistung, das heißt die maximale Temperaturdifferenz über dem Kühlaggregat erreicht.

Neben dem vorangehend beschriebenen Verfahren ist Gegenstand der Erfindung auch ein Kühlsystem, in welchem das vorangehend beschriebene Verfahren zur Anwendung kommt. Das erfindungsgemäße Kühlsystem weist zumindest ein Kühlaggregat, zumindest einen Kältespeicher und zumindest einen zu kühlenden Lastkreis auf, wobei diese drei Elemente hydraulisch miteinander verbunden und von einem Kühlmedium durchströmt sind, sodass der Lastkreis von dem Kältespeicher und dem Kühlaggregat durch Zirkulation des Kühlmediums gekühlt werden kann, das heißt, Wärme aus dem Lastkreis in den Kältespeicher und das Kühlaggregat abgeführt werden kann. Bei dem Kältespeicher kann es sich vorzugsweise um einen Eisspeicher handeln. Das Kühlaggregat kann in herkömmlicher Weise, beispielsweise als Kompressor-Kühlaggregat, ausgebildet sein, über welches Wärme von dem Kühlmedium beispielsweise an die Umgebung abgeführt wird. Der Lastkreis kann durch ein zu kühlendes Objekt, beispielsweise ein Gebäude oder auch eine Maschine führen, sodass das Kühlmedium dort bei Durchströmung des Lastkreises Wärme von dem Objekt aufnehmen und in den Kältespeicher und zu dem Kühlaggregat abführen kann. Der Lastkreis kann entweder direkt von dem Kühlmedium durchströmt sein, oder aber vorzugsweise einen Wärmetauscher aufweisen, über welchen der Lastkreis mit dem beschriebenen Kreislauf des Kühlmediums zur Wärmeübertragung gekoppelt ist. In dem erfindungsgemäßen Kühlsystem ist die Ausgangstemperatur des Kühlaggregates einstellbar, das heißt veränderbar und es ist ein Durchflussregler zum Einstellen eines Durchflusses von Kühlmedium durch den Kältespeicher vorhanden. Der Durchflussregler kann ein beliebiges Instrument zur Variation bzw. Veränderung des Durchflusses sein, beispielsweise eine in ihrer Drehzahl veränderbare, insbesondere regelbare Pumpe oder ein im Durchfluss variables Ventil.

Ferner ist eine Steuereinrichtung vorgesehen, mittels welcher das Kühlaggregat und der Durchflussregler steuerbar sind. Die Steuereinrichtung ist derart ausgebildet, dass bei der Kühlung des Lastkreises eine Vorlauftemperatur des Lastkreises, das heißt die Kühlmediumtemperatur an der Eingangsseite des Lastkreises, sowie eine aus dem zumindest einen Kältespeicher entnommene Kühlleistung durch Anpassen der von dem zumindest einen Kühlaggregat bereitgestellten Ausgangstemperatur des Kühlmediums sowie durch Anpassen des Durchflusses des Kühlmediums durch den zumindest einen Kältespeicher eingestellt werden können. Bei der Vorlauftemperatur kann es sich um die Vorlauftemperatur des Lastkreises an einer zweiten Seite eines Wärmetauschers handeln, mit welchem der Lastkreis mit dem Kühlmedium-Kreislauf durch den Kältespeicher und das Kühlaggregat gekoppelt ist. Insbesondere kann eine Steuerung oder Regelung der Vorlauftemperatur durch Veränderung der Ausgangstemperatur des Kühlmediums sowie durch Veränderung des Durchflusses des Kühlmediums durch den zumindest einen Kältespeicher erfolgen. Die Steuereinrichtung ist dabei so ausgebildet, dass das Einstellen der Vorlauftemperatur derart erfolgt, dass die Vorlauftemperatur in einem ersten Steuer- bzw. Regelbereich allein durch Einstellen des Durchflusses durch den Kältespeicher und in einem zweiten Steuerbzw. Regelbereich allein durch Anpassen der Ausgangstemperatur des Kühlmediums eingestellt wird. Das bedeutet, die Steuereinrichtung ist so ausgebildet, dass sie das oben beschriebene Verfahren zum Betrieb eines Kühlsystems durch entsprechende Steuerung der Komponenten des Kühlsystems ausführt bzw. zur Anwendung bringt. Daher wird auf die obige Beschreibung hinsichtlich des Verfahrens verwiesen. Es ist dabei zu verstehen, dass die Steuereinrichtung so ausgebildet sein kann, dass sie das Verfahren in einer oder mehrerer seiner oben beschriebenen Varianten zur Anwendung bringt.

Besonders bevorzugt ist in dem erfindungsgemäßen Kühlsystem der genannte Durchflussregler von einer Umwälzpumpe gebildet. Weiter bevorzugt ist die Umwälzpumpe in ihrer Drehzahl einstell- bzw. regelbar. Das heißt, die Umwälzpumpe kann insbesondere einen elektrischen Antriebsmotor, welcher über einen Frequenzumrichter in seiner Drehzahl eingestellt bzw. geregelt wird, aufweisen.

Gemäß einer weiteren bevorzugten Ausführungsform weist die Steuereinrichtung einen Temperaturregler zur Regelung der Vorlauftemperatur auf. Dieser Temperaturregler ist vorzugsweise derart ausgebildet, dass die Vorlauftemperatur auf einen Vorlauftemperatur-Referenzwert geregelt wird und dass der Temperaturregler eine Temperaturstellgröße ausgibt. Der Vorlauftemperatur-Referenzwert kann, wie oben beschrieben, ein vorgegebener Referenzwert sein, welcher beispielsweise in Abhängigkeit von einer Außentemperatur oder einer im Objekt zu erreichenden Temperatur vorgegeben wird. Die Temperaturstellgröße kann, wie oben beschrieben, dazu benutzt werden, nachfolgende Regelschritte auszuführen, in denen der Durchfluss und/oder die Ausgangstemperatur eingestellt werden. Alternativ oder zusätzlich zu dem genannten Temperaturregler kann die Steuereinrichtung einen Kühlleistungsregler aufweisen, welcher die Kühlleistung des Kältespeichers auf einen Kühlleistungs-Referenzwert regelt und einen Durchflusssollwert für den Durchfluss ausgibt. Dabei wird der Durchflusssollwert abhängig von dem Kühlleistungs-Referenzwert und der aktuellen Kühlleistung ausgegeben, sodass die Kühlleistung, wie oben beschrieben, an den Kühlleistungs-Referenzwert angepasst wird, bzw. die Kühlleistung auf den Kühlleistungs-Referenzwert geregelt wird. Der Durchflusssollwert für den Durchfluss wird dann genutzt, den Durchflussregler anzusteuern. Der Durchflussregler stellt den Durchfluss dann auf den Durchflusssollwert ein bzw. regelt den Durchfluss auf diesen Durchflusssollwert. Im Weiteren wird auf die obige Beschreibung des Verfahrens verwiesen.

Weiter bevorzugt ist dem Temperaturregler und dem Kühlleistungsregler ein Hierarchie-Steuerglied nachgeschaltet. Das Hierarchie-Steuerglied sorgt für die oben beschriebene sequentielle bzw. hierarchische Steuerung bzw. Regelung. Das Hierarchie-Steuerglied ist dem Temperaturregler und dem Kühlleistungsregler derart nachgeschaltet, dass die Temperaturstellgröße und der Durchflusssollwert dem Hierarchie-Steuerglied als Eingangsgrößen zugeführt werden. Das heißt, das Hierarchie-Steuerglied kommt dann zum Einsatz, wenn sowohl ein Temperaturregler als auch ein Kühlleistungsregler eingesetzt werden. Das Hierarchie-Steuerglied ist derart ausgebildet, dass es unter Berücksichtigung der vorangehend beschriebenen verschiedenen Regelbereiche, das heißt insbesondere des ersten und des zweiten Regelbereiches, die einzustellende Ausgangstemperatur und den einzustellenden Durchfluss ausgibt. Das heißt, das Hierarchie-Steuerglied wählt die Regelbereiche aus und stellt sicher, dass in gewünschten Betriebszuständen der erste Regelbereich und in anderen gewünschten Betriebszuständen der zweite Regelbereich zur Anwendung kommt. Dabei kann das Hierarchie-Steuerglied, wie oben anhand des Verfahrens beschrieben, die Regelbereiche abhängig von bestimmten Parametern, insbesondere in Abhängigkeit des Durchflusses auswählen. So kann dem Hierarchie-Steuerglied der aktuelle Durchfluss bzw. eine diesen repräsentierende Größe als Eingangsgröße zugeführt werden und das Hierarchie-Steuerglied so ausgebildet sein, dass es dann, wenn der Durchfluss einen vorbestimmten Durchflusssollwert, insbesondere ein Maximum des Durchflusssollwertes erreicht, von dem ersten Regelbereich in den zweiten Regelbereich umschaltet bzw. dann eine Steuerung bzw. Regelung des Kühlsystems nach den Regeln des zweiten Regelbereiches veranlasst. Entsprechend kann weiter bevorzugt auch der dritte Regelbereich von dem Hierarchie-Steuerglied ausgewählt werden, insbesondere, wenn die Soll-Ausgangstemperatur und/oder eine Soll-Temperaturdifferenz des Kühlaggregates einen bestimmten Grenzwert erreicht.

Dazu kann auch die Ausgangstemperatur und/oder die Eingangstemperatur und die aktuelle Temperaturdifferenz dem Hierarchie-Steuerglied als Eingangsgrößen zugeführt werden.

Nachfolgend wird die Erfindung beispielhaft anhand der beigefügten Figuren beschrieben. In diesen zeigt:

Fig. 1    schematisch ein Kühlsystem gemäß einer ersten Ausführungsform der Erfindung,

Fig. 2    schematisch ein Kühlsystem gemäß einer zweiten Ausführungsform der Erfindung,

Fig. 3    schematisch ein Kühlsystem gemäß einer dritten Ausführungsform der Erfindung,

Fig. 4    schematisch ein Kühlsystem gemäß einer vierten Ausführungsform der Erfindung,

Fig. 5    schematisch einen Regler zur Ausführung des erfindungsgemäßen Verfahrens,

Fig. 6    schematisch den sequenziellen Regelablauf mit Hilfe des in Fig. 5 gezeigten Reglers, und

Fig. 7    ein Diagramm, in welchem die einzelnen Regelbereiche graphisch veranschaulicht sind.

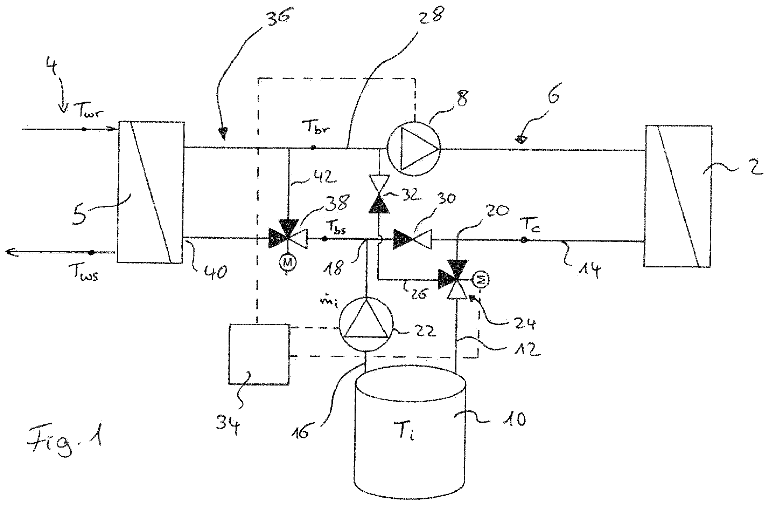

Das in Fig. 1 gezeigte Kühlsystem weist als wesentliche Komponenten ein Kühlaggregat 2 sowie einen Verbraucher in Form eines Lastkreises 4 auf, welcher über einen Wärmetauscher 5 mit dem Kühlkreislauf 6 durch das Kühlaggregat 2 verbunden ist. Das Kühlaggregat 2 ist hier schematisch als Wärmetauscher dargestellt. Das Kühlaggregat 2 kann ein bekanntes Kühlaggregat, beispielsweise mit Kompressor und Wärmetauscher sein. Der Lastkreis 4 kann beispielsweise durch ein zu kühlendes Gebäude, einen zu kühlenden Gebäudeteil oder ein zu kühlendes Objekt, wie beispielsweise eine Maschine, verlaufen. Das Kühlaggregat 2 und der Wärmetauscher 5 sind über Leitungen, welche den Kühlkreislauf 6 bilden, miteinander verbunden. In dem Kühlkreislauf 6 zirkuliert ein Kühlmedium, wie beispielsweise Glycol. Zur Förderung des Kühlmediums im Kühlkreislauf 6 ist eine erste Förderpumpe in Form eines Umwälzpumpenaggregates 8 vorgesehen. In diesem Beispiel ist das Umwälzpumpenaggregat 8 in einer Rücklaufleitung von dem Wärmetauscher 5 zu dem Kühlaggregat 2 angeordnet, alternativ könnte es jedoch auch an einer anderen Stelle im Kühlkreislauf 6 angeordnet sein. Bevorzugt ist das Umwälzpumpenaggregat 8 in seiner Drehzahl einstell- bzw. regelbar, sodass der Durchfluss durch den Kühlkreislauf 6 variiert werden kann.

Erfindungsgemäß ist als weitere wesentliche Komponente in dem gezeigten Kühlsystem ein Kältespeicher 10 vorhanden, welcher in diesem Ausführungsbeispiel als Eisspeicher ausgebildet ist. D. h. der Kältespeicher 10 weist einen Behälter auf, welcher mit Wasser gefüllt ist, welches gefroren wird, um Energie in Form von Kälte, d. h. fehlender Wärme zu speichern. Der Kältespeicher 10 weist eine Eingangsleitung 12 auf, welche von einer Vorlaufleitung 14 des Kühlkreislaufes 6 abzweigt. Ferner weist der Kältespeicher 10 eine Ausgangsleitung 16 auf, welche an einem Mündungspunkt 18 in die Vorlaufleitung 14 mündet. Dabei ist der Mündungspunkt 18 in der Vorlaufleitung 14 stromabwärts des Abzweigpunktes 20 gelegen, an welchem die Eingangsleitung 12 von der Vorlaufleitung 14 abzweigt.

In der Ausgangsleitung 16 des Kältespeichers 10 ist eine zweite Förderpumpe in Form einer Umwälzpumpe bzw. eines Umwälzpumpenaggregates 22 angeordnet, welches einen Durchflussregler bildet. Das Umwälzpumpenaggregat 22 fördert das Kühlmedium durch den Kältespeicher 10, um diesen zu kühlen oder diesem Wärme zuzuführen, um den Verbraucher 4 zu kühlen, wie weiter unten beschrieben wird. Das Umwälzpumpenaggregat 22 könnte anstatt in der Ausgangsleitung 16 auch in der Eingangsleitung 12 des Kältespeichers 10 angeordnet sein.

In der Eingangsleitung 12 zu dem Kältespeicher 10 ist eine Umschalteinrichtung in Form eines Umschaltventils 24 angeordnet. Das Umschaltventil ist als 3/2-Wegeventil ausgebildet und in diesem Ausführungsbeispiel durch einen Motor M motorisch verstellbar, d. h. zwischen den zwei Strömungswegen umschaltbar. Einer der drei Anschlüsse des Umschaltventils 24 ist mit dem Kältespeicher 10 verbunden, ein zweiter Anschluss ist mit dem Abzweigpunkt 20, d. h. der Vorlaufleitung 14 verbunden. Ein dritter Anschluss ist über eine Strömungsverbindung 26 mit einer Rücklaufleitung 28 des Kühlkreislaufes 6 verbunden. Dabei mündet die Strömungsverbindung 26 in die Rücklaufleitung 28 stromaufwärts des Umwälzpumpenaggregates 8 in die Rücklaufleitung 28.

Das Umschaltventil 24 kann dazu genutzt werden, das gezeigte Kühlsystem zwischen zwei möglichen Betriebszuständen umzuschalten.

Ein erster Betriebszustand dient der Kühlung des Lastkreises 4. In diesem Betriebszustand ist der Kältespeicher zu dem Kühlaggregat 2 parallel geschaltet. Dies geschieht dadurch, dass das Umschaltventil 24 so geschaltet wird, dass der dem Kältespeicher 10 zugewandte Anschluss mit der Strömungsverbindung 26 verbunden wird und gleichzeitig der Strömungsweg zu dem Abzweigpunkt 20 geschlossen wird. In diesem Betriebszustand fördert das Umwälzpumpenaggregat 8 Kühlmedium im Kühlkreislauf 6 über die Rücklaufleitung 28 und das Kühlaggregat 2 sowie die Vorlaufleitung 14 durch den Wärmetauscher 5, um diesen zu kühlen.

Durch Abschalten des Umwälzpumpenaggregates 8 kann dieser Kühlkreislauf unterbrochen werden. Über die zweite Förderpumpe in Form des Umwälzpumpenaggregates 22 wird ein zweiter parallel verlaufender Kühlkreislauf geschaffen, in welchem über die Rücklaufleitung 28, die Strömungsverbindung 26, durch den Kältespeicher 10 und die Ausgangsleitung 16 Kühlmedium ebenfalls im Kreislauf durch den Wärmetauscher 5 geführt wird. So kann Wärme aus dem Verbraucher in den Kältespeicher 10 abgeführt werden. In dem Kältespeicher 10 erhöht sich dabei die Temperatur des dort gespeicherten Mediums. Im Falle eines Eisspeichers kann das Eis beispielsweise auftauen. Wenn nur das Umwälzpumpenaggregat 22 betrieben wird und das Umwälzpumpenaggregat 8 abgeschaltet ist, kann die Kühlung allein durch den Kältespeicher 10 bewirkt werden. Sollte die Kühlleistung nicht ausreichen oder der Kältespeicher 10 nicht mehr ausreichend kalt sein, kann zusätzlich das Umwälzpumpenaggregat 8 in Betrieb genommen werden und gleichzeitig eine parallele Kühlung über das Kühlaggregat 2 erfolgen. Sollte der Kältespeicher 10 nicht mehr ausreichend kalt sein, kann das Umwälzpumpenaggregat 22 abgeschaltet werden und die Kühlung so alleine durch Betrieb des Umwälzpumpenaggregates 8 über das Kühlaggregat 2 erfolgen. Die Zuschaltung des Kältespeichers 10 und des Kühlaggregates 2 erfolgt dabei gemäß dem weiter unten beschriebenen Verfahren.

Zwischen dem Abzweigpunkt 20 und dem Mündungspunkt 18 ist in der Vorlaufleitung 14 ein Rückschlagventil 30 angeordnet, welches verhindert, dass bei dieser Parallelschaltung Kühlmedium von dem Mündungspunkt 18 direkt zurück in den Abzweigpunkt 20 strömt. In diesem Ausführungsbeispiel ist auch in der Strömungsverbindung 26 ein Rückschlagventil 32 angeordnet, welches sicherstellt, dass durch die Strömungsverbindung 26 Kühlmedium nur in der Richtung von der Rücklaufleitung 28 zu dem Umschaltventil 24 strömen kann.

Die Steuerung des Umschaltventiles 24 über dessen Motor M erfolgt über eine Steuereinrichtung 34. Zusätzlich kann die Steuereinrichtung 34 die Umwälzpumpenaggregat 8 und 22 steuern, d. h. insbesondere ein- und ausschalten. Weiter bevorzugt bewirkt die Steuereinrichtung 34 darüber hinaus eine Drehzahlregelung des Umwälzpumpenaggregates 8 und/oder des Umwälzpumpenaggregates 22, um den Durchfluss durch die Kühlkreisläufe zu regeln und insbesondere an den Kältebedarf des Lastkreises 4 anpassen zu können. In den Figuren sind die Signal- bzw. Steuerverbindungen durch gestrichelte Linien dargestellt. Diese können durch Leitungen, aber auch drahtlos realisiert werden. Im vorliegenden Beispiel ist die Pumpensteuerung bzw. -regelung mit in die Steuereinrichtung 34, welche das Umschaltventil 24 ansteuert, integriert. Es ist jedoch zu verstehen, dass die Pumpenregelung bzw. -steuerung auch über eine separate Steuereinrichtung erfolgen könnte.

Zum Kühlen des Kältespeichers 10 wird das gezeigte Kühlsystem über die Steuereinrichtung 34 in einen zweiten Betriebszustand gebracht. In diesem zweiten Betriebszustand sind der Kältespeicher 10, der Wärmetauscher 5 und das Kühlaggregat 2 in Reihe bzw. in Serie geschaltet. Dies erfolgt durch Umschalten des Umschaltventils 24 über den Motor M, welcher dazu von der Steuereinrichtung 34 angesteuert wird. Bei dem Motor M kann es sich um einen Elektromotor, insbesondere einen Schrittmotor oder auch um einen anderen elektrischen Antrieb handeln. Es ist jedoch zu verstehen, dass hier auch andere geeignete Antriebe Verwendung finden könnten. In dem zweiten Betriebszustand, d. h. einer zweiten Schaltstellung des Umschaltventiles 24 sind dessen Anschluss, welcher dem Abzweigpunkt 20 zugewandt ist und dessen Anschluss, welcher dem Kältespeicher 10 zugewandt ist, miteinander verbunden. Gleichzeitig ist der Anschluss, welcher der Strömungsverbindung 26 zugewandt ist, verschlossen. Bei Betrieb des Umwälzpumpenaggregates 22 wird mit dieser Schaltstellung erreicht, dass zumindest ein Teilstrom in dem Kühlkreislauf 6 aus dem Vorlauf 14 über den Abzweigpunkt 20 und das Umschaltventil 24 durch den Kältespeicher 10 geleitet wird. Über die Ausgangsleitung 26 verläuft die Strömung dann wieder in die Vorlaufleitung 14, von dort durch den Wärmetauscher 5 und dann über die Rücklaufleitung 28 und das Umwälzpumpenaggregat 8 zurück zu dem Kühlaggregat 2. In dieser Schaltstellung wird somit das in dem Kühlaggregat 2 abgekühlte Kühlmedium direkt dem Kältespeicher 10 zugeführt, sodass dieser im Wesentlichen mit der Ausgangstemperatur des Kühlaggregates 2, welche die niedrigste Temperatur im Kühlkreislauf 6 ist, gekühlt werden kann. Somit wird eine optimale Kühlleistung zum Abkühlen des Kältespeichers 10 erreicht.

Abgekühlt wird der Kältespeicher 10 vorzugsweise dann, wenn günstige oder überschüssige Energie zur Verfügung steht, welche aktuell zur Kühlung des Lastkreises 4 nicht benötig wird. Die dabei in dem Kältespeicher 10 gespeicherte Kälte kann dann später zur Kühlung des Lastkreises 4 genutzt werden, wenn dieser beispielsweise eine besonders hohe Kühlleistung benötigt, weniger Energie zum Betrieb des Kühlaggregates 2 zur Verfügung steht und/oder die Energiepreise höher sind. Die Informationen über zur Verfügung stehende Energie und Energiepreise können der Steuereinrichtung 34 beispielsweise über ein Smart-grid zugeführt werden.

Im gezeigten Beispiel ist der Verbraucher ferner mit einer Mischeinrichtung 36 versehen, welche im Kühlkreislauf 6 am Wärmetauscher 5 gelegen ist, um die Temperatur des Kühlmediums in dem Wärmtauscher 5 einzustellen. Diese weist ein Mischventil 38 auf, welches über einen Motor M elektromotorisch verstellbar ist. Das Mischventil ist als 3/3-Wegeventil ausgebildet, wobei es nicht nur ein Umschalten zwischen den zwei Strömungswegen ermöglicht, sondern zur Änderung des Verhältnisses, d. h. des Durchgangsverhältnisses zwischen den beiden Strömungswegen in der Lage ist. Von den drei Anschlüssen des Mischventiles ist einer mit der Vorlaufleitung 14, ein zweiter mit dem Eingang 40 des Wärmetauschers 5 und ein dritter mit einer Mischleitung 42 verbunden, welche in der Rücklaufleitung 28 abzweigt und somit mit dem Ausgang des Wärmetauschers 5 in Verbindung steht. Über das Mischventil 38 kann der Kühlmediumströmung durch die Vorlaufleitung 40 zu dem Eingang 40 des Wärmetauschers 5 Kühlmedium aus dem Rücklauf von dem Wärmetauscher 5, d. h. aus der Rücklaufleitung 28 über die Mischleitung 42 in veränderbarer Menge zugemischt werden. So kann die Temperatur des Kühlmediums am Eingang 40 des Wärmetauschers 5 eingestellt bzw. geregelt werden. Durch Zumischen von Kühlmedium aus dem wärmeren Rücklauf wird die Temperatur im Vorlauf erhöht. Diese Mischeinrichtung ist autonom, das heißt, sie wird unabhängig von dem übrigen System geregelt und daher unten bei der Beschreibung der Steuerung bzw. Regelung des übrigen Systems außer Betracht gelassen.

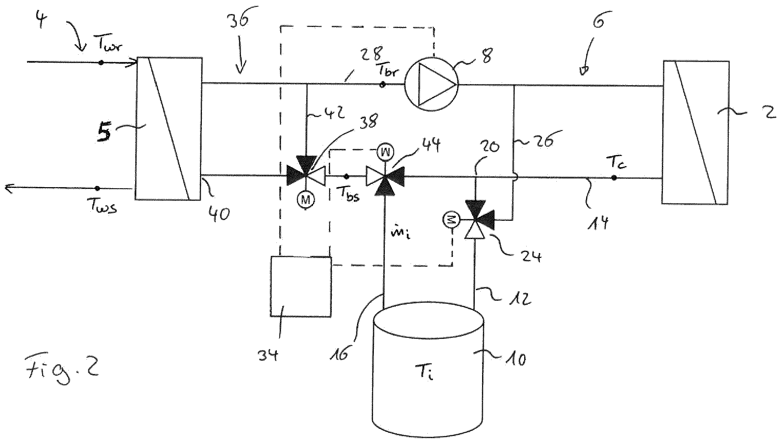

Das zweite Ausführungsbeispiel in Fig. 2 unterscheidet sich von dem Ausführungsbeispiel in Fig. 1 dadurch, dass auf die zweite Förderpumpe in Form des Umwälzpumpenaggregates 22 verzichtet ist. Stattdessen ist in dem Mündungspunkt 18 ein Regulierventil 44 angeordnet, welches einen Drehflussregler bildet. D. h. in diesem zweiten Ausführungsbeispiel wird der Durchfluss durch den Kältespeicher 10 nicht über eine separate Pumpe geregelt, sondern über das Regulierventil 44. Das Regulierventil ist wie das Mischventil 38 als 3/3-Wegeventil ausgebildet. Ein erster Anschluss des Regulierventils 44 ist mit dem dem Kühlaggregat 2 zugewandten Abschnitt der Vorlaufleitung 14 verbunden. Ein zweiter Anschluss ist dem Verbraucher zugewandt und ein dritter Anschluss ist mit der Ausgangsleitung 16 des Kältespeichers 10 verbunden. Über einen Motor M, welcher in diesem Beispiel von der Steuereinrichtung 34 angesteuert wird, lässt sich der Strömungsweg mittels des Regulierventils 44 durch Verändern dessen Schaltstellung verändern. So kann der Strömungsweg in einer ersten Endstellung aus der Vorlaufleitung 14 direkt zu dem Wärmetauscher 5, in diesem Fall bevorzugt über das Mischventil 38, erfolgen. In dieser Schaltstellung ist der Strömungsweg durch den Kältespeicher 10 unterbrochen. In einer zweiten Schalt- bzw. Endstellung hingegen ist der Strömungsweg aus der Vorlaufleitung 14 durch das Regulierventil 44 unterbrochen, sodass der Strömungsweg lediglich über den Abzweigpunkt 20 und durch den Kältespeicher 10 und dann durch das Regulierventil 44 zu dem Wärmetauscher 5 bzw. dem vorgeschalteten Mischventil 38 erfolgt. Bevorzugt ist das Regulierventil 44 so ausgebildet, dass es Zwischenstellungen zwischen diesen beiden Endstellungen zulässt, sodass die aus dem Kühlaggregat 2 in die Vorlaufleitung 14 austretende Kühlmediumströmung in zwei Teilströme aufgeteilt werden kann, von welchen einer durch den Kältespeicher 10 und der andere direkt über das Regulierventil 44 zu dem Verbraucher 4 erfolgt. Durch Veränderung der Zwischenstellungen kann das Verhältnis dieser Teilströme reguliert werden und damit der Durchfluss durch den Kältespeicher geregelt bzw. gesteuert werden.

Auch in dem Ausführungsbeispiel gemäß Fig. 2 funktioniert die Mischeinrichtung 36 zur Temperaturregelung der Kühlmediumtemperatur am Eingang 40 des Wärmetauschers 5, wie anhand von Fig. 1 beschrieben, als autonomes System. Auch ist bei dem Ausführungsbeispiel gemäß Fig. 2 das Umschalten zwischen den zwei anhand von Fig. 1 beschriebenen Betriebszuständen mithilfe des Umschaltventils 24 möglich. In einem ersten Betriebszustand sind der Kältespeicher 10 und das Kühlaggregat 2 wie oben beschrieben parallel geschaltet. In dem zweiten Betriebszustand wird auch hier der Strömungsweg durch die Strömungsverbindung 26 unterbrochen und der Strömungsweg von dem Abzweigpunkt 20 zu dem Kältespeicher 10 geöffnet. So wird ein Kühlmediumstrom direkt von dem Kühlaggregat 2 durch den Kältespeicher 10 zu dessen Kühlung gelenkt. In diesem Betriebszustand kann der Strömungsweg von dem Kühlaggregat 2 zu dem Wärmetauscher 5 durch entsprechende Schaltung des Regulierventiles 44 unterbrochen werden, sodass der Kühlmedium-kreislauf vollständig durch den Kältespeicher 10 und anschließend von diesem durch den Wärmetauscher 5 zurück zu dem Kühlaggregat 2 erfolgt. Bei dem Ausführungsbeispiel gemäß Fig. 2 werden alle Kühlmediumströme allein durch das eine Umwälzpumpenaggregat 8 erzeugt.

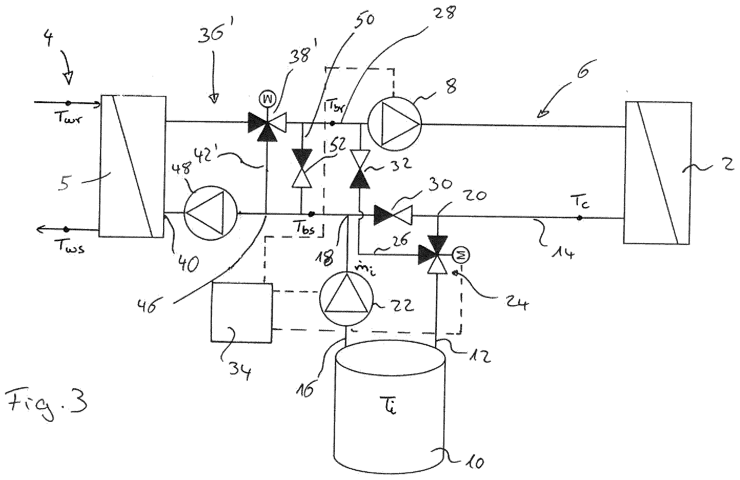

Ein drittes Ausführungsbeispiel gemäß Fig. 3 unterscheidet sich von dem ersten Ausführungsbeispiel gemäß Fig. 1 in dem Aufbau der Mischeinrichtung 36'. Die Mischeinrichtung 36' weist ein Mischventil 38' auf, welches im Unterschied zu dem Ausführungsbeispiel gemäß Fig. 1 jedoch nicht im Vorlauf bzw. am Eingang des Wärmetauschers 5, sondern an dessen Ausgang bzw. im Rücklauf gelegen ist. Das Mischventil 38' ist ein 3/3-Wegeventil, wobei das Verhältnis der zwei möglichen Strömungswege zueinander veränderbar ist, d. h. es ist nicht lediglich ein Umschalten, sondern auch ein Mischen zwischen beiden Strömungswegen möglich. Von den drei Anschlüssen des Mischventiles 38' ist ein erster mit dem Ausgang des Wärmetauschers 5 verbunden. Ein zweiter Anschluss ist mit der weiteren Rücklaufleitung 28 verbunden und steht somit mit dem Umwälzpumpenaggregat 8 in Verbindung. Der dritte Anschluss ist mit einer Mischleitung 42' verbunden, welcher an einem Mündungspunkt 46 in die Vorlaufleitung 14 mündet. Dabei liegt der Mündungspunkt 46 stromabwärts des Mündungspunktes 18, an welchem die Ausgangsleitung 16 des Kältespeichers 10 in die Vorlaufleitung 14 mündet. Die Mischeinrichtung 36 weist darüber hinaus ein Umwälzpumpenaggregat 48 auf, über welches der Durchfluss bzw. Volumenstrom des Kühlmediums durch den Verbraucher 4 eingestellt bzw. geregelt wird. Dazu ist das Umwälzpumpenaggregat 48 vorzugsweise in seiner Drehzahl regulier- bzw. regelbar. Auch hier erfolgt die Regelung der Mischeinrichtung 36' autonom, das heißt unabhängig von den übrigen Teilen des Systems.

Über das Mischventil 38' kann ähnlich dem Mischventil 38 in Figuren 1 und 2 dem Strom von Kühlmedium aus dem Vorlauf 14, welcher durch das Umwälzpumpenaggregat 48 erzeugt wird, ein Anteil von wärmeren Kühlmedium aus dem Rücklauf des Wärmetauschers 5 zugemischt werden, um die Temperatur am Eingang 40 des Wärmetauschers 5 gegenüber der Vorlauftemperatur in der Vorlaufleitung 14 zu erhöhen. So ist eine Temperatureinstellung bzw. -regelung der Kühlmediumtemperatur am Eingang 40 des Wärmetauschers 5 möglich. Die in Fig. 3 gezeigte Ausführungsform hat den Vorteil, dass die Kühlmediumströme durch den Wärmetauscher 5, das Kühlaggregat 2 und den Kältespeicher 10 hydraulisch völlig unabhängig voneinander eingestellt bzw. geregelt werden können, da für diese drei Teilbereiche drei separate Pumpen, nämlich das Umwälzpumpenaggregat 8, das Umwälzpumpenaggregat 22 und das Umwälzpumpenaggregat 48 vorgesehen sind. Darüber hinaus ist es durch Abschalten des Umwälzpumpenaggregates 48 auch möglich, den Kühlmediumstrom durch den Wärmetauscher 5 vollständig abzuschalten. Dies kann vorteilhaft sein, um ein Einfrieren der Leitungen im Bereich des Wärmetauschers 5 zu verhindern, wenn im Lastkreis 4 kein Kühlbedarf besteht, d. h. keine ausreichende abzuführende Wärmemenge vorhanden ist. Um in diesem Fall die Strömung durch das Umwälzpumpenaggregat 8 und gegebenenfalls das Umwälzpumpenaggregat 22 aufrechterhalten zu können, ist in diesem Ausführungsbeispiel ein Bypass 50 vorgesehen, welcher die Vorlaufleitung 14 mit der Rücklaufleitung 28 parallel zu dem Wärmetauscher 5 verbindet. Dabei zweigt der Bypass 50 von der Vorlaufleitung 14 stromabwärts des Mündungspunktes 18 und stromaufwärts des Mündungspunktes 46 von der Vorlaufleitung 14 ab und mündet in die Rücklaufleitung 28 stromaufwärts des Umwälzpumpenaggregates 8 und der Einmündung der Strömungsverbindung 26. Dies ist in diesem Beispiel stromabwärts des Mischventils 38'. In dem Bypass 50 ist ein Rückschlagventil 52 angeordnet, welches eine Strömung nur in der Richtung von der Vorlaufleitung 14 zu der Rücklaufleitung 28 zulässt.

Die beiden Betriebszustände zum Kühlen des Kältespeichers 10 und zum Kühlen des Lastkreises 4 funktionieren bei dem Ausführungsbeispiel gemäß Fig. 3 genauso, wie es anhand von Fig. 1 beschrieben wurde. Insofern wird auf diese Beschreibung verwiesen.

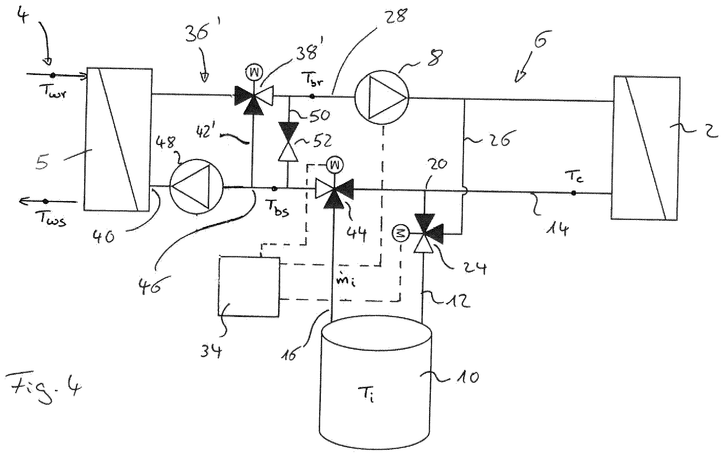

Das Ausführungsbeispiel gemäß Fig. 4 stellt eine Kombination der Ausführungsformen gemäß der Figuren 2 und 3 dar, d. h. es ist die in Fig. 3 beschriebene Mischeinrichtung 36' mit dem Mischventil 38' und dem Umwälzpumpenaggregat 48 vorgesehen. Gleichzeitig ist wie bei dem Ausführungsbeispiel gemäß Fig. 2 anstelle des Umwälzpumpenaggregates 22 ein Regulierventil 44 vorgesehen, welches einen Durchflussregler bildet. wird hinsichtlich der Funktion der Mischeinrichtung 36 auf die Erläuterungen zu Fig. 3 und hinsichtlich der Funktion des Regulierventils 44 auf die entsprechenden Ausführungen zu Fig. 2 verwiesen.

Es ist zu verstehen, dass alle beschriebenen Pumpen anstelle im Vorlauf auch im Rücklauf oder umgekehrt angeordnet sein können. Ferner können alle Mischventile entweder zur Teilung einer Strömung in zwei Strömungen oder zur Zusammenführung zweier Strömungen in eine Strömung angeordnet sein. Diese Varianten werden alle als Äquivalent angesehen. Darüber hinaus können anstatt der gezeigten 3/3- oder 3/2-Wegeventile auch Anordnungen mehrerer einzelner Ventile, welche in Kombination die gewünschte Funktion bereitstellen, realisiert werden. Auch sind die beschriebenen Rückschlagventile nicht zwingend erforderlich und könnten gegebenenfalls entfallen. Darüber hinaus könnten zusätzliche Rückschlagventile in einzelnen Strömungswegen angeordnet sein, um einen unerwünschten Rückfluss der Strömung zu verhindern. Ferner können die verschiedenen anhand der Figuren 1 bis 4 gezeigten Varianten auch unterschiedlich miteinander kombiniert werden.

Auch ist zu verstehen, dass auch mehrere Kältespeicher 10 vorhanden sein könnten, welche z. B. zueinander parallel geschaltet sind. Ferner könnten auch mehrere Kühlaggregate 2 und/oder mehrere Wärmetauscher 5 vorgesehen sein. Auch die beschriebenen Umwälzpumpenaggregate könnten als Anordnungen von Umwälzpumpenaggregaten, welche aus mehreren parallel oder in Reihe geschaltet wirkenden Pumpenaggregaten zusammengesetzt sind, ausgebildet sein.

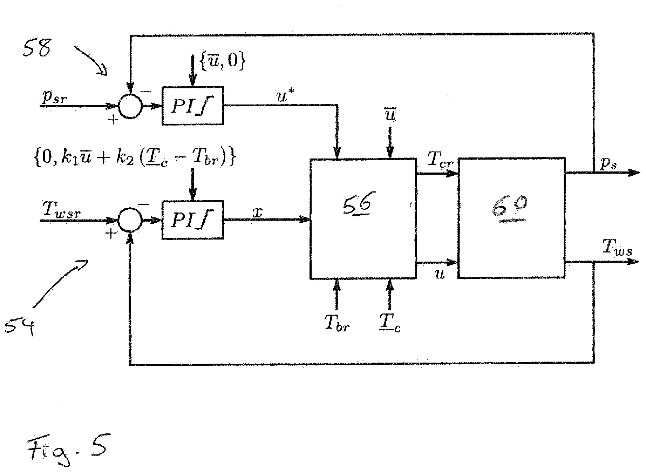

Nachfolgend wird anhand der Fig. 5 bis 7 die Steuerung bzw. Regelung des Kühlsystems im Entladebetrieb, das heißt, wenn der Kältespeicher 10 entladen wird, um den Lastkreis 4 zu kühlen, beschrieben. Der Regelung liegen zwei zu regelnde Zielgrößen zugrunde, nämlich zum einen die Vorlauftemperatur $T_{ws}$ im Lastkreis 4 und zum anderen die Kühlleistung $p_s$, welche von dem Kältespeicher 10 erbracht wird. Bei diesen beiden Zielgrößen wird die Vorlauftemperatur $T_{ws}$ als vorrangig betrachtet. Die Kühlleistung $p_s$ ist abhängig vom Durchfluss $\dot{m}_i$ durch den Kältespeicher 10 sowie der Temperaturdifferenz zwischen der Ausgangstemperatur $T_c$ des Kühlaggregates 2 und der Temperatur $T_i$ des Kältespeichers. Die Kühlleistung ergibt sich dabei insbesondere nach folgender Formel:

$$p_s = \dot{m}_i \times Cp_b\, e_{it} \times (T_c - T_i)$$

wobei $e_{it}$ eine Konstante und $Cp_b$ die spezifische Wärmekapazität des Kühlmediums ist.

Das in Fig. 5 gezeigte Regelsystem weist einen ersten PI-Regler 54 auf, welcher dazu dient, die Vorlauftemperatur $T_{ws}$ auf einen Vorlauftemperatur-Referenzwert $T_{wsr}$ zu regeln. Dieser Vorlauftemperatur-Referenzwert $T_{wsr}$ ist ein vorgegebener Wert, welcher beispielsweise abhängig von einer zu erreichenden Raum- oder Außentemperatur eines zu klimatisierenden Gebäudes ist. Der erste PI-Regler 54 gibt eine Temperaturstellgröße x aus, welche einem Hierarchie-Steuerglied 56, welches nachfolgend beschrieben wird, als Eingangsgröße zugeführt wird. Die Temperaturstellgröße x wird in dem PI-Regler 54 basierend auf der Differenz zwischen dem Vorlauftemperatur-Referenzwert $T_{wsr}$ und der aktuellen Vorlauftemperatur $T_{ws}$ erzeugt, wobei der PI-Regler 54 dabei eine Temperaturstellgröße x zwischen 0 und einem physikalischen Maximum erzeugt, in welchem $k_1$ und $k_2$ Konstanten darstellen und $\bar{u}$ das physikalische Maximum des Durchfluss bzw. einer Durchflussstellgröße darstellt und $\underline{T}_c$ das physikalische Minimum der zu erreichenden Ausgangstemperatur $T_c$ des Kühlaggregates 2 darstellt. Es ist zu erkennen, dass der PI-Regler 54 nicht mit der Kühlleistung $p_s$ gekoppelt ist bzw. von dieser beeinflusst ist.

Ein zweiter PI-Regler 58 dient der Regelung der Kühlleistung $p_s$ auf einem Kühlleistungsreferenzwert $p_{sr}$, welcher ein vorgegebener Sollwert ist. Der PI-Regler 58 gibt einen Durchflusssollwert $u^*$ aus, welche dem Pumpenaggregat 22 oder einem Regulierventil 44 zugeführt wird, um den entsprechenden Durchfluss durch den Kältespeicher 10 einzustellen. Dabei ist die untere Grenze des PI-Reglers 58 durch den maximal einzustellenden physikalischen Durchfluss $\bar{u}$ vorgegeben. Dabei ist zu verstehen, dass der Durchfluss $\bar{u}$ ein für den Durchfluss repräsentativer Wert sein kann, insbesondere eine Drehzahl des Umwälzpumpenaggregates 22 oder einen Öffnungsgrad des Regulierventils 44 darstellen kann. Der Durchflusssollwert $u^*$ wird ebenfalls dem Hierarchie-Steuerglied 56 zugeführt. Es ist zu erkennen, dass der PI-Regler 58 von der Vorlauftemperatur $T_{ws}$ unbeeinflusst ist bzw. nicht mit dieser gekoppelt ist. Da die Vorlauftemperatur $T_{ws}$ den PI-Regler 58 nicht beeinflusst und die Kühlleistung $p_s$ den PI-Regler 54 nicht beeinflusst, ist ein Schwingen bzw. Aufschaukeln (Hunting) zwischen den PI-Reglern 54 und 58 nicht zu befürchten.

Das Hierarchie-Steuerglied 56 erhält neben der Temperaturstellgröße x und dem Durchflusssollwert $u^*$ als Eingangsgrößen noch die Rücklauftemperatur $T_{br}$ des Kühlkreislaufes 6 sowie die physikalischen Grenzen $\underline{T}_c$ für die Ausgangstemperatur $T_c$ des Kühlaggregates 2 sowie $\overline{u}$ für den Durchfluss u durch den Kältespeicher 10. Im Falle eines Pumpenaggregates 22 kann der Durchfluss u eine zu dem Durchfluss proportionale Größe, wie die Pumpendrehzahl sein. Im Falle eines Regulierventils 44 kann der Durchfluss u ein Ventilöffnungsgrad sein, welcher zu dem tatsächlichen Durchfluss proportional ist. Das Hierarchie-Steuerglied 56 gibt als Ausgangsgrößen ein Signal für den Durchfluss u, das heißt beispielsweise eine Drehzahl oder einen Ventilöffnungsgrad, sowie eine Soll-Ausgangstemperatur $T_{cr}$ aus. Dieses Durchflusssignal bzw. der Durchfluss u wird dem Umwälzpumpenaggregat 22 oder dem Regulierventil 44 als Stellgröße zugeführt, um diese einzustellen, um einen gewünschten Durchfluss durch das Kühlaggregat 10 einzustellen. Die Soll-Ausgangstemperatur $T_{cr}$ wird dem Kühlaggregat 2 als Steuer- bzw. Stellgröße zugeführt, sodass das Kühlaggregat 2 in seiner Leistung so angepasst wird, dass seine Ausgangstemperatur $T_c$ der Soll-Ausgangstemperatur $T_{cr}$ entspricht. In Fig. 5 repräsentiert der Kasten mit dem Bezugszeichen 60 das Kühlsystem, an welchem sich ausgangsseitig eine tatsächliche Kühlleistung $p_s$ und eine tatsächliche Vorlauftemperatur $T_{ws}$ ergeben, welche den PI-Reglern 54 und 58 als gemessene Eingangsgrößen zugeführt werden.

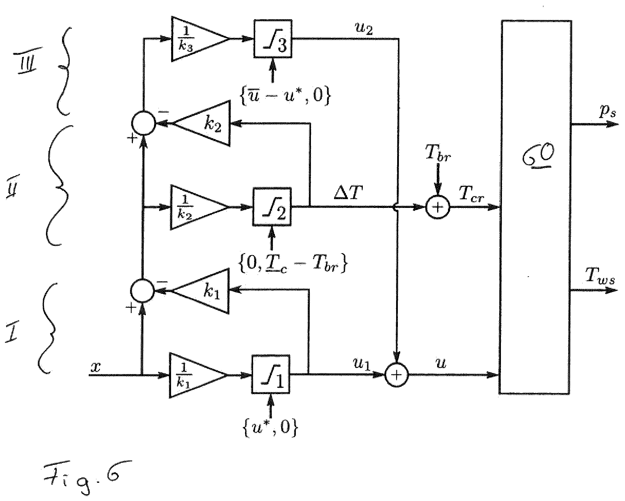

Das Hierarchie-Steuerglied 56 arbeitet, wie in Fig. 6 schematisch beschrieben und stellt sicher, dass die Regelung der Vorlauftemperatur $T_{ws}$ und der Kühlleistung $p_s$ in mehreren getrennten Regelbereichen I bis III erfolgt. Ein erster Regelbereich I kommt zur Anwendung, bis der Durchfluss bzw. ein den Durchfluss repräsentierender Wert $u_1$ den von dem PI-Regler 58 vorgegebenen Durchflusssollwert $u^*$ als Grenze erreicht. In diesem Regelbereich I wird der den Durchfluss repräsentierende Wert $u_1$ als zu erreichender Durchfluss u bzw. Durchfluss-Kennwert u dem Kühlsystem 60 zugeführt und entsprechend der Durchfluss über das Umwälzpumpenaggregat 22 oder das Regulierventil 44 eingestellt. In diesem ersten Regelbereich wird die Vorlauftemperatur $T_{ws}$ insofern allein durch Anpassen des Durchflusses u eingestellt.

Bei Erreichen des Durchflusssollwertes $u^*$ wird dieser konstant gehalten und es wird in einen zweiten Regelbereich II gewechselt, in welchem die weitere Regelung durch Anpassen der Ausgangstemperatur $T_c$ des Kühlaggregates 2 erfolgt. Hier wird als Steuergröße eine Temperaturdifferenz $\Delta T$, welche zwischen Ein- und Ausgang des Kühlaggregates 2 erreicht werden soll, ausgegeben. In Addition mit der Rücklauftemperatur $T_{br}$ ergibt sich so eine Soll-Ausgangstemperatur $T_{cr}$ für das Kühlaggregat 2, welche dem System 60 neben dem Durchflusskennwert u als Steuer- bzw. Stellgröße zugeführt wird. Das Kühlaggregat 2 wird entsprechend in seiner Leistung so eingestellt, dass die Ausgangstemperatur $T_{cr}$ erreicht wird. Dabei wird gleichzeitig der Durchfluss u durch den Kältespeicher 10 auf dem Durchflusssollwert $u^*$ konstant gehalten. Dieser zweite Regelbereich II erstreckt sich bis zu einem Erreichen einer physikalisch möglichen Minimaltemperatur $\underline{T}_c$ des Kühlaggregates 2.

Wenn diese Grenze erreicht ist, wird in einen dritten Regelbereich III gewechselt, in welchem zusätzlich der Durchfluss u bzw. ein den Durchfluss repräsentierender Wert bis zu einem physikalischen Maximum $\overline{u}$ eingestellt wird. In diesem dritten Regelbereich III wird das Kühlaggregat 2 mit seiner maximalen Leistung, beispielsweise seiner maximalen Drehzahl betrieben, sodass die minimale Ausgangstemperatur $\underline{T}_c$ erreicht wird. Gleichzeitig wird als Steuer- bzw. Stellgröße für das Umwälzpumpenaggregat 22 oder das Regulierventil 44 ein Durchfluss u ausgegeben, welcher über dem Durchflusssollwert $u^*$ liegt und sich bis in den Bereich des physikalischen Maximums $\overline{u}$ für den Durchfluss erstreckt. Das physikalische Maximum kann beispielsweise der maximale Öffnungsgrad des Regulierventils oder die maximale Drehzahl des Umwälzpumpenaggregates 22 sein.

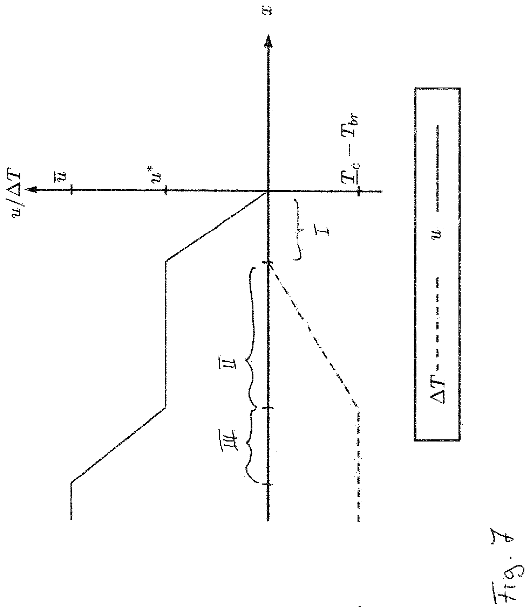

Der erste Regelbereich I, der zweite Regelbereich II und der dritte Regelbereich III sind noch einmal schematisch in Fig. 7 dargestellt. Es ist zu erkennen, dass in dem ersten Regelbereich I die Regelung nur durch Veränderung des Durchflusses u bzw. eines Durchflusskennwertes u bis zu einem vorgegebenen Durchflusssollwert $u^*$ erfolgt. Im zweiten Regelbereich II bleibt der Durchfluss konstant auf dem Durchflusssollwert $u^*$ und die Regelung erfolgt allein durch Veränderung der Ausgangstemperatur $T_c$ des Kühlaggregates 2 bzw. der vom Kühlaggregat 2 erzeugten Temperaturdifferenz $\Delta T$. Der zweite Regelbereich II endet, wenn die Temperaturdifferenz $\Delta T$ ihr Maximum und die Ausgangstemperatur $T_c$ ihr Minimum $\underline{T}_c$ erreichen. In dem dritten Regelbereich III bleibt die Temperaturdifferenz $\Delta T$ auf ihrem Maximum, das heißt, es wird die minimale Ausgangstemperatur $\underline{T}_c$ erreicht und die Regelung erfolgt wiederum durch Veränderung des Durchflusses bzw. des Durchflusskennwertes u zwischen dem Durchflusssollwert $u^*$ als Untergrenze und dem physikalischen Maximum $\overline{u}$ für den Durchfluss bzw. den Durchflusskennwert, welches einer maximalen Drehzahl des Umwälzpumpenaggregates 22 oder dem maximalen Ventilöffnungsgrad des Regulierventils 44 entsprechen kann.

**Bezugszeichen**

| 2 | Kühlaggregat |
| 4 | Lastkreis |
| 5 | Wärmetauscher |
| 6 | Kühlkreislauf |
| 8 | Umwälzpumpenaggregat |
| 10 | Kältespeicher |

| 12 | Eingangsleitung |
|---|---|
| 14 | Vorlaufleitung |
| 16 | Ausgangsleitung |
| 18 | Mündungspunkt |
| 20 | Abzweigpunkt |
| 22 | Umwälzpumpenaggregat |
| 24 | Umschaltventil |
| 26 | Strömungsverbindung |
| 28 | Rücklaufleitung |
| 30, 32 | Rückschlagventile |
| 34 | Steuereinrichtung |
| 36, 36' | Mischeinrichtung |
| 38, 38' | Mischventil |
| 40 | Eingang |
| 42, 42' | Mischleitung |
| 44 | Regulierventil |
| 46 | Mündungspunkt |
| 48 | Umwälzpumpenaggregat |
| 50 | Bypass |
| 52 | Rückschlagventil |
| 54 | PI-Regler |
| 56 | Hierarchie-Steuerglied |
| 58 | PI-Regler |
| M | Motor |
| $T_{ws}$ | Vorlauftemperatur des Lastkreises |
| $p_s$ | Kühlleistung |
| $m_i$ | Durchfluss |
| $T_{wsr}$ | Vorlauftemperatur-Referenzwert |
| x | Temperaturstellgröße |
| u | Durchfluss bzw. den Durchfluss repräsentierender Kennwert |
| $u_*$ | Durchflusssollwert bzw. den Durchflusssollwert repräsentierender Kennwert |
| $T_{br}$ | Rücklauftemperatur |
| $T_{cr}$ | Soll-Ausgangstemperatur |
| $T_c$ | Ausgangstemperatur |
| $\underline{T}_c$ | minimale Ausgangstemperatur |
| $\overline{u}$ | physikalisches Maximum des Durchflusses bzw. eines den Durchfluss repräsentierenden Kennwertes |
| $T_{bs}$ | Kühlkreislauf-Vorlauftemperatur des Kühlkreislaufes 6 |
| $T_i$ | Temperatur des Kältespeichers 10 |

## Patentansprüche

1. Verfahren zum Betrieb eines Kühlsystems, welches zumindest ein Kühlaggregat, zumindest einen Kältespeicher sowie zumindest einen zu kühlenden Lastkreis aufweist, die von einem Kühlmedium durchströmt werden, wobei zum Kühlen des Lastkreises der Kältespeicher und das Kühlaggregat in einer Parallelschaltung mit dem Lastkreis verbunden werden, **dadurch gekennzeichnet, dass** bei der Kühlung des Lastkreises eine Vorlauftemperatur ($T_{ws}$) des Lastkreises sowie eine aus dem zumindest einen Kältespeicher entnommene Kühlleistung ($p_s$) durch Anpassen einer von dem zumindest einen Kühlaggregat bereitgestellten Ausgangstemperatur ($T_c$) des Kühlmediums sowie eines Durchflusses (u) des Kühlmediums durch den zumindest einen Kältespeicher eingestellt werden, wobei das Einstellen der Vorlauftemperatur ($T_{ws}$) des Lastkreises derart erfolgt, dass die Vorlauftemperatur ($T_{ws}$) in einem ersten Regelbereich allein durch Anpassen des Durchflusses (u) durch den Kältespeicher und in einem zweiten Regelbereich allein durch Anpassen der Ausgangstemperatur ($T_c$) eingestellt wird.

2. Verfahren nach Anspruch 1, **dadurch gekennzeichnet, dass** in dem ersten Regelbereich die Ausgangstemperatur ($T_c$) des Kühlaggregates nicht verändert wird und vorzugsweise das Kühlaggregat nicht in Betrieb ist.

3. Verfahren nach einem der vorangehenden Ansprüche, **dadurch gekennzeichnet, dass** in dem zweiten Regelbereich der Durchfluss (u) durch den zumindest einen Kältespeicher zur Temperaturregelung der Vorlauftemperatur ($T_{ws}$) nicht angepasst wird und vorzugsweise auf einem vorgegeben Durchflusssollwert (u*) gehalten wird.

4. Verfahren nach einem der vorangehenden Ansprüche, **dadurch gekennzeichnet, dass** der erste Regelbereich angewendet wird, bis der Durchfluss (u) einen vorbestimmten Durchflusssollwert (u*) erreicht.

5. Verfahren nach Anspruch 4 oder 5, **dadurch gekennzeichnet, dass** der Durchflusssollwert (u*) für den Durchfluss durch einen Kühlleistungsregler vorgegeben wird, welcher die Kühlleistung ($p_s$) auf einen Kühlleistungs-Referenzwert ($p_{sr}$) regelt.

6. Verfahren nach einem der vorangehenden Ansprüche, **dadurch gekennzeichnet, dass** durch einen Temperaturregler, welcher die Vorlauftemperatur ($T_{ws}$) auf einen Vorlauftemperatur-Referenzwert ($T_{wsr}$) regelt, eine Temperaturstellgröße (x) vorgegeben wird.

7. Verfahren nach Anspruch 6, **dadurch gekennzeichnet, dass** abhängig von der Temperaturstellgröße (x) in dem ersten Regelbereich der Durchfluss (u) eingestellt und in dem zweiten Regelbereich die Ausgangstemperatur ($T_c$) eingestellt wird.

8. Verfahren nach einem der vorangehenden Ansprüche, **dadurch gekennzeichnet, dass** in einem dritten Regelbereich die Vorlauftemperatur ($T_{ws}$) durch Einstellen des Durchflusses (u) durch den Kältespeicher bei gleichzeitigem Betrieb des Kühlaggregates geregelt wird.

9. Verfahren nach Anspruch 8, **dadurch gekennzeichnet, dass** in dem dritten Regelbereich der Durchfluss (u) bis zu einem Maximalwert einstellbar ist.

10. Verfahren nach Anspruch 8 oder 9, **dadurch gekennzeichnet, dass** in dem dritten Regelbereich das Kühlaggregat derart eingestellt wird, dass eine Soll-Ausgangstemperatur ($T_{cr}$) und/oder eine Soll-Temperaturdifferenz ($\Delta T$) des Kühlaggregates einen Grenzwert annehmen.

11. Kühlsystem mit zumindest einem Kühlaggregat, zumindest einem Kältespeicher sowie zumindest einem zu kühlenden Lastkreis, welche hydraulisch miteinander verbunden sind und von einem Kühlmedium durchströmt werden, sodass der Lastkreis von dem Kältespeicher und dem Kühlaggregat durch Zirkulation des Kühlmedium gekühlt werden kann und der Kältespeicher und das Kühlaggregat in einer Parallelschaltung mit dem Lastkreis verbunden sind, wobei die Ausgangstemperatur des Kühlaggregats einstellbar ist und ein Durchflussregler zum Einstellen eines Durchflusses durch den Kältespeicher vorhanden ist, **gekennzeichnet durch** eine Steuereinrichtung, welche derart ausgebildet ist, dass bei der Kühlung des Lastkreises eine Vorlauftemperatur ($T_{ws}$) des Lastkreises sowie eine aus dem zumindest einen Kältespeicher entnommene Kühlleistung ($p_s$) durch Anpassen der von dem zumindest einen Kühlaggregat bereitgestellten Ausgangstemperatur ($T_c$) des Kühlmediums sowie Anpassen des Durchflusses (u) des Kühlmediums durch den zumindest einen Kältespeicher eingestellt werden, wobei das Einstellen der Vorlauftemperatur derart erfolgt, dass die Vorlauftemperatur ($T_{ws}$) in einem ersten Regelbereich allein durch Einstellen des Durchflusses (u) durch den Kältespeicher und in einem zweiten Regelbereich allein durch Anpassen der Ausgangstemperatur ($T_c$) des Kühlmediums eingestellt wird.

12. Kühlsystem nach Anspruch 12, **dadurch gekennzeichnet, dass** der Durchflussregler von einer Umwälzpumpe gebildet wird.

13. Kühlsystem nach Anspruch 11 oder 12, **dadurch gekennzeichnet, dass** die Steuereinrichtung einen Temperaturregler zur Regelung der Vorlauftemperatur ($T_{ws}$) aufweist, welcher die Vorlauftemperatur ($T_{ws}$) auf einen Vorlauftemperatur-Referenzwert ($T_{wsr}$) regelt und eine Temperaturstellgröße (x) ausgibt, und/oder einen Kühlleistungsregler aufweist, welcher die Kühlleistung ($p_s$) auf einen Kühlleistungs-Referenzwert ($p_{sr}$) regelt und einen Durchflusssollwert (u*) für den Durchfluss ausgibt.

14. Kühlsystem nach Anspruch 13, **dadurch gekenn-**

**zeichnet, dass** dem Temperaturregler und dem Kühlleistungsregler ein Hierarchie-Steuerglied derart nachgeschaltet ist, dass die Temperaturstellgröße (x) und der Durchflusssollwert (u*) dem Hierarchie-Steuerglied als Eingangsgrößen zugeführt werden, und das Hierarchie-Steuerglied derart ausgebildet ist, dass es unter Berücksichtigung der verschiedenen Regelbereiche die einzustellende Ausgangstemperatur ($T_c$) und den einzustellenden Durchfluss (u) ausgibt.

**Claims**

1. A method for operating a cooling system, which comprises at least one cooling assembly, at least one cold accumulator as well as at least one load circuit to be cooled, and a cooling medium flows through these, wherein for cooling the load circuit, the cold accumulator and the cooling assembly are connected to the load circuit in a parallel connection, **characterised in that** on cooling the load circuit, a feed temperature ($T_{ws}$) of the load circuit as well as a cooling power ($p_s$) which is taken from the at least one cold accumulator are set by way of adapting an outlet temperature ($T_c$) of the cooling medium which is provided by the at least one cooling assembly, as well as a flow (u) of the cooling medium through the at least one cold accumulator, wherein the setting of the feed temperature ($T_{ws}$) in the load circuit is effected in a manner such that the feed temperature ($T_{ws}$) in a first regulating region is set solely by way of adapting the flow (u) through the cold accumulator and in a second regulating region solely by way of adapting the outlet temperature ($T_c$).

2. A method according to claim 1, **characterised in that** in the first regulating region, the outlet temperature ($T_c$) of the cooling assembly is not changed and preferably the cooling assembly is not in operation.

3. A method according to one of the preceding claims, **characterised in that** in the second regulating region, the flow (u) through the at least one cold accumulator is not adapted for the temperature regulation of the feed temperature ($T_{ws}$) and is preferably held at a predefined flow setpoint (u*).

4. A method according to one of the preceding claims, **characterised in that** the first regulating region is used until the flow (u) reaches a predefined flow setpoint (u*).

5. A method according to claim 4 or 5, **characterised in that** the flow setpoint (u*) for the flow is specified by a cooling power controller which closed-loop con-

trols the cooling power ($p_s$) to a cooling power reference value ($p_{sr}$).

6. A method according to one of the preceding claims, **characterised in that** a temperature control variable (x) is specified by a temperature controller which closed-loop controls the feed temperature ($T_{ws}$) to a feed temperature reference value ($T_{wsr}$).

7. A method according to claim 6, **characterised in that** depending on the temperature control variable (x), the flow (u) is set in the first regulating region and the outlet temperature ($T_c$) is set in the second regulating region ($T_c$).

8. A method according to one of the preceding claims, **characterised in that** in a third regulating region, the feed temperature ($T_{ws}$) is closed-loop controlled by way of setting the flow (u) through the cold accumulator given a simultaneous operation of the cooling assembly.

9. A method according to claim 8, **characterised in that** the flow (u) can be set up to a maximal value in the third regulating region.

10. A method according to claim 8 or 9, **characterised in that** in the third regulating region, the cooling assembly is set in a manner such that a desired outlet temperature ($T_{cr}$) and/or a desired temperature difference ($\Delta T$) of the cooling assembly assume a limit value.

11. A cooling system with at least one cooling assembly, at least one cold accumulator as well as at least one load circuit to be cooled, wherein these are hydraulically connected to one another and a cooling medium flows through them, so that the load circuit can be cooled by the cold accumulator and the cooling assembly by way of circulation of the cooling medium and the cold accumulator and the cooling assembly are connected to the load circuit in a parallel connection, wherein the outlet temperature of the cooling assembly is settable and a flow controller for setting a flow through the cold accumulator is present, **characterised by** a control device which is designed in a manner such that on cooling the load circuit, a feed temperature ($T_{ws}$) of the load circuit as well as a cooling power ($p_s$) which is taken from the at least one cold accumulator are set by way of adapting the outlet temperature ($T_c$) of the cooling medium which is made available by the at least one cooling assembly as well as by adapting the flow (u) of the cooling medium through the at least one cold accumulator, wherein the setting of the feed temperature is effected in a manner such that the feed temperature ($T_{ws}$) in a first regulating region is set solely by setting the flow (u) through the cold accumulator and in a second regulating region solely by way of adapting the outlet temperature ($T_c$).

12. A cooling system according to claim 12, **characterised in that** the flow controller is formed by a circulation pump.

13. A cooling system according to claim 11 or 12, **characterised in that** the control device comprises a temperature controller for the closed-loop control of the feed temperature ($T_{ws}$), said controller closed-loop controlling the feed temperature ($T_{ws}$) to a feed temperature reference value ($T_{wsr}$) and outputting a temperature control variable (x), and/or comprises a cooling power controller which closed-loop controls the cooling power ($p_s$) to a cooling power reference value ($p_{sr}$) and outputs a flow setpoint (u*) for the flow.

14. A cooling system according to claim 13, **characterised in that** a hierarchy control element is connected in series after the temperature controller and the cooling power controller in a manner such that the temperature control variable (x) and the flow setpoint (u*) are led to the hierarchy control element as input variables, and the hierarchy control element is designed in a manner such that it outputs the outlet temperature ($T_c$) to be set and the flow (u) to be set, whilst taking into account the different regulating regions.

**Revendications**

1. Procédé de fonctionnement d'un système de refroidissement qui comprend au moins un groupe réfrigérant, au moins un accumulateur de froid ainsi qu'au moins un circuit de charge destiné à être refroidi, lesquels sont parcourus par un agent réfrigérant, pour le refroidissement du circuit de charge, l'accumulateur de froid et le groupe réfrigérant étant raccordés en parallèle au circuit de charge,
**caractérisé en ce que**
lors du refroidissement du circuit de charge, une température de départ ($T_{ws}$) du circuit de charge ainsi qu'une puissance de refroidissement ($p_s$) prélevée dudit au moins un accumulateur de froid sont réglées par adaptation d'une température de sortie ($T_c$) de l'agent réfrigérant, mise à disposition par ledit au moins un groupe réfrigérant, et d'un flux (u) de l'agent réfrigérant passant par ledit au moins un accumulateur de froid, le réglage de la température de départ ($T_{ws}$) du circuit de charge étant fait de façon que la température de départ ($T_{ws}$) soit réglée dans une première plage de réglage uniquement par adaptation du flux (u) passant par l'accumulateur de froid et dans une deuxième plage de réglage uniquement par adaptation de la température de sortie ($T_c$).

**2.** Procédé selon la revendication 1, **caractérisé en ce que** dans la première plage de réglage, la température de sortie ($T_c$) du groupe réfrigérant n'est pas modifiée et que, de préférence, le groupe réfrigérant est arrêté.

**3.** Procédé selon l'une des revendications précédentes, **caractérisé en ce que** dans la deuxième plage de réglage, le flux ($u$) n'est pas adapté par ledit au moins un accumulateur de froid pour le réglage de température de la température de départ ($T_{ws}$) et que, de préférence, il est maintenu à une valeur de flux de consigne prédéterminée ($u^*$).

**4.** Procédé selon l'une des revendications précédentes, **caractérisé en ce que** la première plage de réglage est appliquée jusqu'à ce que le flux ($u$) atteigne une valeur de flux de consigne ($u^*$) prédéterminée.

**5.** Procédé selon la revendication 3 ou 4, **caractérisé en ce que** le flux de consigne ($u^*$) pour le flux est prédéterminée par un régulateur de puissance de refroidissement qui règle la puissance de refroidissement ($p_s$) à une valeur de référence de puissance de refroidissement ($p_{sr}$).

**6.** Procédé selon l'une des revendications précédentes, **caractérisé en ce qu'**une grandeur de réglage de température ($x$) est prédéterminée par un régulateur de température qui règle la température de départ ($T_{ws}$) à une valeur de référence de température de départ ($T_{wsr}$).

**7.** Procédé selon la revendication 6, **caractérisé en ce qu'**il est réglé, en fonction de la grandeur de réglage de température ($x$), le flux ($u$) dans la première plage de réglage et la température de sortie ($T_c$) dans la deuxième plage de réglage.

**8.** Procédé selon l'une des revendications précédentes, **caractérisé en ce que** la température de départ ($T_{ws}$) est réglée, dans une troisième plage de réglage, par le réglage du flux ($u$) par l'accumulateur de froid pendant que le groupe réfrigérant est en fonctionnement.

**9.** Procédé selon la revendication 8, **caractérisé en ce que**, dans la troisième plage de réglage, le flux ($u$) peut être réglé jusqu'à une valeur maximale.

**10.** Procédé selon la revendication 8 ou 9, **caractérisé en ce que**, dans la troisième plage de réglage, le groupe réfrigérant est réglé de façon telle qu'une température de sortie de consigne ($T_{cr}$) et/ou une différence de température de consigne ($\Delta T$) du groupe réfrigérant atteigne (nt) une valeur limite.

**11.** Système de refroidissement avec au moins un groupe réfrigérant, au moins un accumulateur de froid ainsi qu'au moins un circuit de charge destiné à être refroidi, lesquels sont reliés les uns aux autres hydrauliquement et sont parcourus par un agent réfrigérant, si bien que le circuit de charge puisse être refroidi par l'accumulateur de froid et le groupe réfrigérant par la circulation de l'agent réfrigérant, l'accumulateur de froid et le groupe réfrigérant étant raccordés en parallèle au circuit de charge, la température de sortie du groupe réfrigérant étant réglable et un régulateur de flux pour régler le flux passant par l'accumulateur de froid étant présent,
**caractérisé par**
un dispositif de commande qui est configuré de façon telle que lors du refroidissement du circuit de charge, une température de départ ($T_{ws}$) du circuit de charge ainsi qu'une puissance de refroidissement ($p_s$) prélevée dudit au moins un accumulateur de froid soient réglées par adaptation de la température de sortie ($T_c$) de l'agent réfrigérant, mise à disposition par ledit au moins un groupe réfrigérant, et par adaptation du flux ($u$) de l'agent réfrigérant passant par ledit au moins un accumulateur de froid, le réglage de la température de départ étant fait de façon que la température de départ ($T_{ws}$) soit réglée dans une première plage de réglage uniquement par adaptation du flux ($u$) passant par l'accumulateur de froid et dans une deuxième plage de réglage uniquement par adaptation de la température de sortie ($T_c$) de l'agent réfrigérant.

**12.** Système de refroidissement selon la revendication 11, **caractérisé en ce que** le régulateur de flux est constitué par une pompe de recirculation.

**13.** Système de refroidissement selon la revendication 11 ou 12, **caractérisé en ce que** le dispositif de commande comprend un régulateur de température pour régler la température de départ ($T_{ws}$), qui qui règle la température de départ ($T_{ws}$) à une valeur de référence de température de départ ($T_{wsr}$) et qui émet une grandeur de réglage de température ($x$) et/ou comprend un régulateur de puissance de refroidissement qui règle la puissance de refroidissement ($p_s$) à une valeur de référence de puissance de refroidissement ($p_{sr}$) et émet une valeur de flux de consigne ($u^*$) pour le flux.

**14.** Système de refroidissement selon la revendication 13, **caractérisé en ce qu'**un élément de commande d'hiérarchie est monté en aval du régulateur de température et du régulateur de puissance de refroidissement de façon telle que la grandeur de réglage de température ($x$) et la valeur de flux de consigne ($u^*$) soient acheminées à l'élément de commande d'hiérarchie comme grandeurs d'entrée et **en ce que** l'élément de commande d'hiérarchie soit configuré de façon qu'il émette, en tenant compte des différentes plages de réglage, la température de sortie ($T_c$) à atteindre et le flux (u) à atteindre.

Fig. 1

Fig. 2

Fig. 3

EP 3 009 756 B1

EP 3 009 756 B1

$T_{wr}$

$4$

$5$

$48$

$40$

$46$

$34$

$36'$

$42'$

$38'$

$T_{bs}$

$50$

$52$

$44$

$16$

$\dot{m}_i$

$28$

$8$

$T_{br}$

$W$

$M$

$20$

$24$

$12$

$26$

$6$

$T_c$

$14$

$2$

$T_{ws}$

$10$

$T_i$

Fig. 4

Fig. 5

Fig. 6

EP 3 009 756 B1

Fig. 7

EP 3 009 756 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9404319 U1
- DE 9404320 U1